# EUROPEAN PATENT APPLICATION

(11) **EP 2 221 449 A2**
(43) Date of publication of application: **25.08.2010**
(21) Application number: 10150444.7
(22) Date of filing: 11.01.2010
(51) Int. Cl.: E21B 33/035, E21B 47/12, H04L 29/06

(54) **A subsea well control system**

(30) Priority: 18.02.2009 GB 0902692
(71) Applicant: Vetco Gray Controls Limited, Bristol BS48 1BS (GB)
(72) Inventor: Simpson, Steven, Redland, Bristol BS6 6XX (GB); Davis, Julian, Frampton Cotterell, Bristol BS36 2LD (GB); Kent, Ian, Nailsea, Bristol BS48 2BH (GB)
(74) Representative: Emerson, Peter James

(57) **Abstract**

A subsea well control system comprises: a well tree (6 or 7) having a subsea control module (10 or 11); and a power and communications distribution module (5) for communication with the subsea control module via a communication link (8 or 9) between the subsea control module and the distribution module. The link comprises a 4-wire dual twisted copper pair as part of an RS422-based interface.

## Description

### Field of the Invention

The present invention relates to a subsea well control system.

### Background of the Invention

Communications via an umbilical to a subsea hydrocarbon well complex, from a topside well control platform or surface vessel, typically terminate at a subsea umbilical termination assembly (UTA) which encompasses a power and communications distribution module from which communications are transmitted to subsea control modules (SCMs) mounted on subsea well Christmas trees, via fibre optic links. In the past copper based interfaces using modems were employed to transmit data from subsea power and communications distribution modules to well trees but became inadequate when the data rate requirements and distances increased with more sophisticated well communication. Thus, fibre optic links were employed to cope with these increased data rates and distances. Even in some applications where a range of only 200 metres at a bandwidth of 1M bit/sec is required, fibre optic links still had to be employed.

### Summary of the Invention

According to the present invention from one aspect, there is provided a subsea well control system comprising: a well tree having a subsea control module; and a power and communications distribution module which communicates with the subsea control module via a communication link between the subsea control module and the distribution module, wherein said link comprises a 4-wire dual twisted copper pair as part of an RS422-based interface.

The distribution module is typically in an underwater termination assembly, for example one coupled to a control arrangement at a surface facility via an umbilical for carrying power and communications.

Where the distribution module is in an underwater termination assembly, said RS422-based interface preferably comprises an RS422 chip set in the underwater termination assembly coupled with an RS422 chip set at said tree via said 4-wire dual twisted copper pair.

The data rate of the interface could, for example, be at least 1M bit/sec.

The length of the link could, for example, be at least 100 metres, for example at least 200 metres, such as at least 800 metres.

According to the present invention from another aspect, there is provided a method of communicating between a power and communications distribution module and a subsea control module of a well tree in a subsea control system, the method comprising using a link which comprises a 4-wire dual twisted copper pair as part of an RS422-based interface.

The invention comprises using a 4-wire (dual twisted copper pair) RS422-based interface. This technology was previously not able to handle bandwidths of 1MHz over distances of 200 metres. However, versions of RS422 chip sets are now commercially available which can provide 1M bit/sec at a range of at least 800 metres. The invention enables substantial cost reductions by eliminating expensive fibre optic connectors and cables in exchange for copper twisted pairs.

### Brief Description of the Drawing

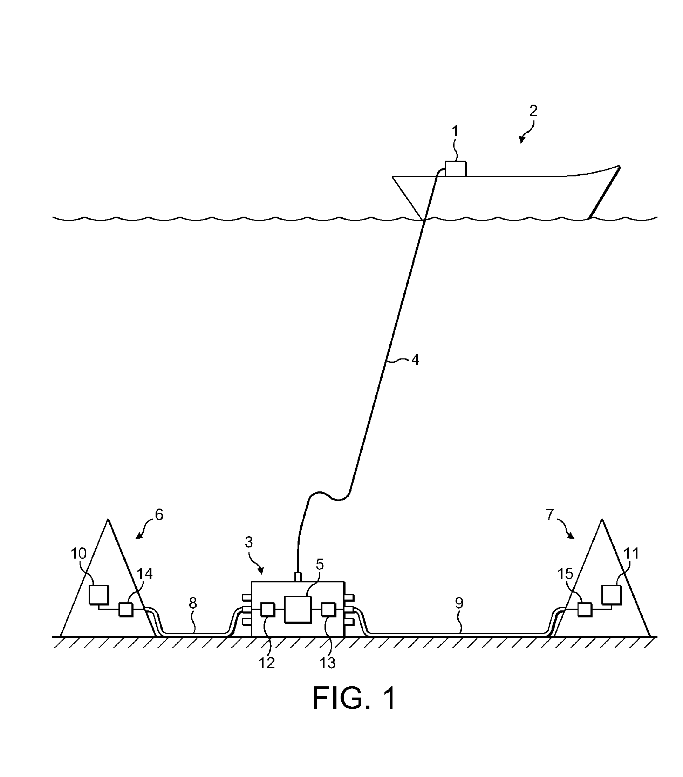

Fig. 1 is a schematic diagram showing one embodiment of the present invention.

### Detailed Description of the Invention.

Referring to Fig. 1, communication from a control arrangement 1 for a hydrocarbon well is transmitted to and from a UTA 3 via an umbilical 4, the control arrangement 1 being located at a surface facility comprising a vessel 2 or topside platform for example. This communication is typically via a fibre optic cable or superimposed on power cables within the umbilical 4. The UTA 3 houses a power and communications module 5 which distributes power and communications to subsea trees, of which two (6 and 7) by way of example are shown, via links in the form of cables 8 and 9 respectively, each at least 100 metres long for example, such as at least 200 metres, or at least 800 metres long. Each of trees 6 and 7 has a respective one of SCMs 10 and 11 with which module 5 communicates via cables 8 and 9. Previously these links would have incorporated fibre optic cables and connectors at considerable expense. However, this invention allows much cheaper copper pairs as RS422-based interfaces for communication between the UTA 3 and the trees 6 and 7. More particularly, each of cables 8 and 9 comprises a 4-wire (dual twisted copper pair), communication via them being from RS422 chip sets 12 and 13 respectively in the UTA 3 and 14 and 15 respectively at the trees 6 and 7. The RS422 chip sets are capable of communicating via the cables 8 and 9 at a data rate of at least 1M bit/sec for example over a distance of at least 100 metres for example, such as at least 200 metres or at least 800 metres.

### Advantages of using the Invention.

The key advantage is the substantial reduction in costs by the replacement of fibre optic cables and connectors with twisted copper pairs and their electrical connectors.

## Claims

1. A subsea well control system comprising: a well tree having a subsea control module; and a power and communications distribution module which communicates with the subsea control module via a communication link between the subsea control module and the distribution module, wherein said link comprises a 4-wire dual twisted copper pair as part of an RS422-based interface.

2. A control system according to claim 1, wherein the distribution module is in an underwater termination assembly.

3. A control system according to claim 2, wherein the underwater termination assembly is coupled to a control arrangement at a surface facility via an umbilical for carrying power and communications.

4. A control system according to claim 2 or 3, wherein said RS422-based interface comprises an RS422 chip set in said underwater termination assembly coupled with an RS422 chip set at said tree via said 4-wire dual twisted copper pair.

5. A control system according to any preceding claim, wherein the length of said link is at least 100 metres.

6. A control system according to claim 5, wherein said length is at least 200 metres.

7. A control system according to claim 6, wherein said length is at least 800 metres.

8. A control system according to any preceding claim, wherein the data rate of said interface is at least 1M bit/sec.

9. A method of communicating between a power and communications distribution module and a subsea control module of a well tree in a subsea control system, the method comprising using a link which comprises a 4-wire dual twisted copper pair as part of an RS422-based interface.
